# EUROPÄISCHE PATENTANMELDUNG

(11) **EP 1 213 849 A1**
(43) Veröffentlichungstag der Anmeldung: **12.06.2002**
(21) Anmeldenummer: 01129452.7
(22) Anmeldetag: 10.12.2001
(51) Int. Cl.: H04B 3/54, H04B 3/56

(54) **Anordnung und Verfahren zur Datenkommunikation in einem Energieverteilungsnetz**

(30) Priorität: 11.12.2000 DE 10061587
(71) Anmelder: SIEMENS AKTIENGESELLSCHAFT, 80333 München (DE)
(72) Erfinder: Bienek, Bernd, 46395 Bocholt (DE); Gröting, Wolfgang, 46149 Oberhausen (DE); Kern, Ralf, 46399 Bocholt (DE); Troks, Werner, 49549 Ladbergen (DE)

(57) **Zusammenfassung**

Die vorliegende Erfindung betrifft eine Anordnung und ein Verfahren zur Datenkommunikation in einem Energieverteilungsnetz mit Kommunikationseinheiten (1) für die Informationsverarbeitung und Koppeleinheiten (2), welche die Kommunikationseinheiten (1) an das Energieverteilungsnetz ankoppeln, wobei durch mindestens ein Informationsflußsteuerelement (4, 10) die Richtung des Informationsflusses durch das Energieverteilungsnetz steuerbar ist.

## Beschreibung

Anordnung und Verfahren zur Datenkommunikation in einem Energieverteilungsnetz

Die vorliegende Erfindung betrifft eine Anordnung und ein Verfahren zur Datenkommunikation in einem Energieverteilungsnetz.

Die Technologie der Übertragung von Daten über das Energieverteilungsnetz ist grundsätzlich bekannt. So werden z.B. für die Steuerung von elektrischen Einrichtungen im Energieverteilungsnetz Steuerungsdaten direkt über die Netzleitung übertragen, wobei die zu sendenden Informationen auf die Wechselspannung des Energieverteilungsnetz aufmoduliert werden. Im "Inhouse"-Bereich sind sogenannte "Babyphones" bekannt, die eine Übertragung von Sprachsignalen über die Netzleitung ermöglichen.

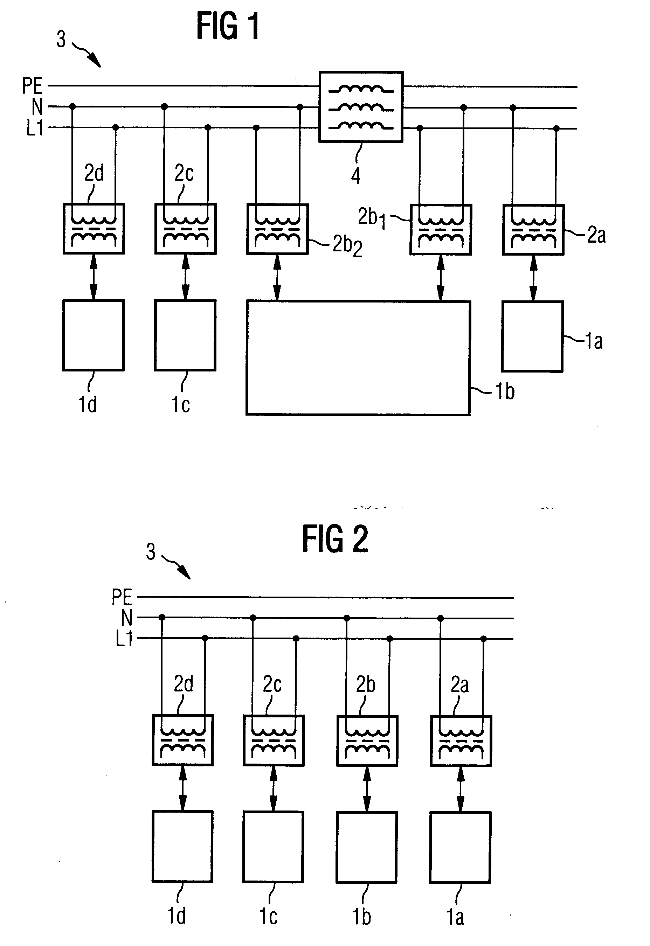

Bei der Power Line Communication (PLC) wird das Energieverteilungsnetz vom Mittelspannungsbereich bis zum "Inhouse"-Bereich für die Telekommunikation genutzt. Das Energieverteilungsnetz ist ab dem letzten Niederspannungstransformator, welcher durchschnittlich 150 bis 200 Haushalte versorgt, bis zu den Verbrauchern meist als Baum ausgelegt. Wie in Fig. 2 dargestellt, erfolgt der Anschluß des Teilnehmers bzw. der Kommunikationseinheit 1a, 1b, 1c, 1d an die Netzleitung 3 im "Inhouse"-Bereich mittels der Koppeleinheiten 2a, 2b, 2c, 2d.

Die für die Power Line Communication (PLC) zur Verfügung stehende Bandbreite ist bei höheren Frequenzen im wesentlichen durch die Leitungsdämpfung und die Anzahl der angeschlossenen Kommunikationseinheiten 1a, 1b, 1c, 1d begrenzt. Die Dämpfung ist von den verwendeten Kabeltypen und von der Art und Anzahl der Abzweige, d.h. der Topologie des Netzes, abhängig.

Um die Bandbreite zu erhöhen bzw. um größere Entfernungen zu überwinden, werden im Netz eine große Anzahl von Repeatern benötigt. Durch die Verwendung einer Signalstruktur wie z.B. dem Zeitmultiplex (TDD) bei der Datenübertragung können systemeigene Störungen bei dem Empfang der Daten verringert werden.

Eine hochbitratige Datenkommunikation (z. B. in dem Frequenzbereich 2,2MHz bis 9,4MHz im "Access"-Bereich und 10,5 bis 24MHz im "Inhouse"-Bereich) über die Leitungen des Energieverteilungsnetzes (Powerline) ist in der dafür benötigten Kanalqualität jedoch schwierig oder nicht möglich. Weitere Gründe sind die frequenzselektiven Einkoppelimpedanzen und Störungen, welche z.B. von benachbarten PLC-Einheiten in dem Energieverteilungsnetz verursacht werden.

Bei einer punktuellen Anschaltung von Koppeleinheiten 2a, 2b, 2c, 2d an eine Netzleitung 3 sendet und empfängt jede Kommunikationseinheit 1a, 1b, 1c, 1d über ihre Koppeleinheit 2a, 2b, 2c, 2d Signale in bzw. aus allen Richtungen des Netzes. D.h., die Kommunikationseinheit 1b in Fig. 2 sendet und empfängt über die Koppeleinheit 2b aufgrund der punktuellen Anschaltung an die Netzleitung 3 Signale in bzw. aus der Richtung der Koppeleinheit 2a und der Koppeleinheit 2c, 2d auch wenn eine Kommunikation nur mit der Kommunikationseinheit 1a erfolgt. Des weiteren werden Störungen wie ein hoher andauernder Rauschpegel und/oder Einstrahlungen von Kurzwellensendern von der Koppeleinheit 2b ebenfalls aus beiden Richtungen empfangen.

Die der Erfindung zu Grunde liegende Aufgabe besteht darin, eine Anordnung bzw. ein Verfahren zu schaffen, daß die Datenkommunikation in einem Energieverteilungsnetz verbessert.

Diese Aufgabe wird gemäß den Merkmalen des Patentanspruchs 1 bzw. 6 gelöst. Somit wird die Richtung des Informationsflusses durch das Energieverteilungsnetz mittels einem oder mehreren Informationsflußsteuerelementen gesteuert.

Ein Informationsflußsteuerelement enthält frequenzselektive Filter und/oder Antennen. Beide Bauelemente können schaltbar ausgeführt werden. Die Filter und die Antennen werden an Verzweigungsstellen in dem Energieverteilungsnetz angeordnet. Die Filter sperren einem Zweig bzw. eine Richtung für den Informationsfluß, indem die aufmodulierten Informationen herausgefiltert werden. Mit den Antennen werden die zu übertragenden Informationen gerichtet in die Leitungen des Energieverteilungsnetzes eingestrahlt. Durch das gerichtete Senden der Informationen mittels Filtern oder Antennen in bzw. durch das Energieverteilungsnetz wird die Sendeleistung in der Übertragungsrichtung erhöht. Der Dynamikbereich wird vergrößert. Die zu sendenden Informationen können über größere Entfernungen im Energieverteilungsnetz übertragen werden, wodurch die Abstände der Repeater erhöht werden können. Dies reduziert die benötigten Hardwarekomponenten, den Montageaufwand und somit die Kosten im Energieverteilungsnetz. Analog wird der Empfänger von Störungen z.B. von benachbarten Kommunikationseinrichtungen aus anderen Richtungen des Energieverteilungsnetzes abgeschirmt. Das Signalstörverhältnis und somit die Empfindlichkeit am Empfänger wird verbessert.

Die Erfindung wird durch die Merkmale der abhängigen Ansprüche weitergebildet.

Die vorliegende Erfindung wird nachfolgend an Hand von Beispielen unter Bezug auf die beigefügten Zeichnungen näher erläutert, in denen zeigen
Fig. 1 ein Beispiel für das erfindungsgemäße Verfahren der Kommunikation über das Energieverteilungsnetz,
Fig. 2 das Verfahren der Kommunikation über das Energieverteilungsnetz gemäß dem Stand der Technik,
Fig. 3 ein Beispiel für das erfindungsgemäße Verfahren der Kommunikation über das Energieverteilungsnetz im "Inhouse"-Bereich,
Fig. 4 ein Beispiel für das erfindungsgemäße Verfahren der Kommunikation über das Energieverteilungsnetz im "Access"-Bereich,
Fig. 5 ein Ausführungsbeispiel für die erfindungsgemäße Anordnung zur Kommunikation über das Energieverteilungsnetz,
Fig. 6 ein zweites Ausführungsbeispiel für die erfindungsgemäße Anordnung zur Kommunikation über das Energieverteilungsnetz,
Fig. 7 ein drittes Ausführungsbeispiel für die erfindungsgemäße Anordnung zur Kommunikation über das Energieverteilungsnetz.

In der in Fig. 1 dargestellten Schaltungsanordnung sind vier Kommunikationseinheiten 1a, 1b, 1c, 1d mit einer dreiadrigen Netzleitung 3 verbunden. Im Gegensatz zu der in der Fig. 2 gezeigten Schaltungsanordnung ist die Kommunikationseinheit 1b mittels zweier Koppeleinheiten 2b₁, 2b₂ an die Netzleitung 3 angekoppelt. Zwischen den beiden Koppeleinheiten 2b₁ und 2b₂ befindet sich ein Informationsflußsteuerelement, nämlich ein Sperrfilter 4. Ein solches Sperrfilter 4 erhält man z.B. durch Umwickeln der einzelnen Adern der Netzleitung 4 mit einer Ferritfolie. Bei einer Kommunikation der Kommunikationseinheit 1b mit der Kommunikationseinheit 1a werden die von der Kommunikationseinheit 1b an die Kommunikationseinheit 1a gesendeten Informationen über die Koppeleinheit 2b₁ an die Netzleitung 3 angekoppelt und gelangen über die Koppeleinheit 2a zu der Kommunikationseinheit 1a. Da die Kommunikation der Kommunikationseinheit 1b mit der Kommunikationseinheit 1a ausschließlich über die Koppeleinheit 2b₁ geführt wird und die von den Kommunikationseinheiten 1a und 1b über die Netzleitung 3 gesendeten Informationen nicht durch das Sperrfilter 4 gelangen können, wird eine Kommunikation zwischen den Kommunikationseinheiten 1c und 1d nicht durch die Kommunikation zwischen den Kommunikationseinheiten 1a und 1b gestört.

Analog dazu werden die Kommunikationseinheiten 1a und 1b bei ihrer Kommunikation nicht von derjenigen Kommunikationseinheit gestört, die sich auf der "anderen Seite" des Filters befinden.

Der Informationsfluß von der Kommunikationseinheit 1b wird durch die Auswahl einer der beiden Koppeleinheiten 2b₁ oder 2b₂ in Richtung der Kommunikationseinheiten 1a bzw. in Richtung der Kommunikationseinheiten 1c und 1d gesteuert. Die von der Kommunikationseinheit 1b abgegebene Sendeleistung steht somit in nahezu voller Höhe in der ausgewählten Richtung zur Verfügung.

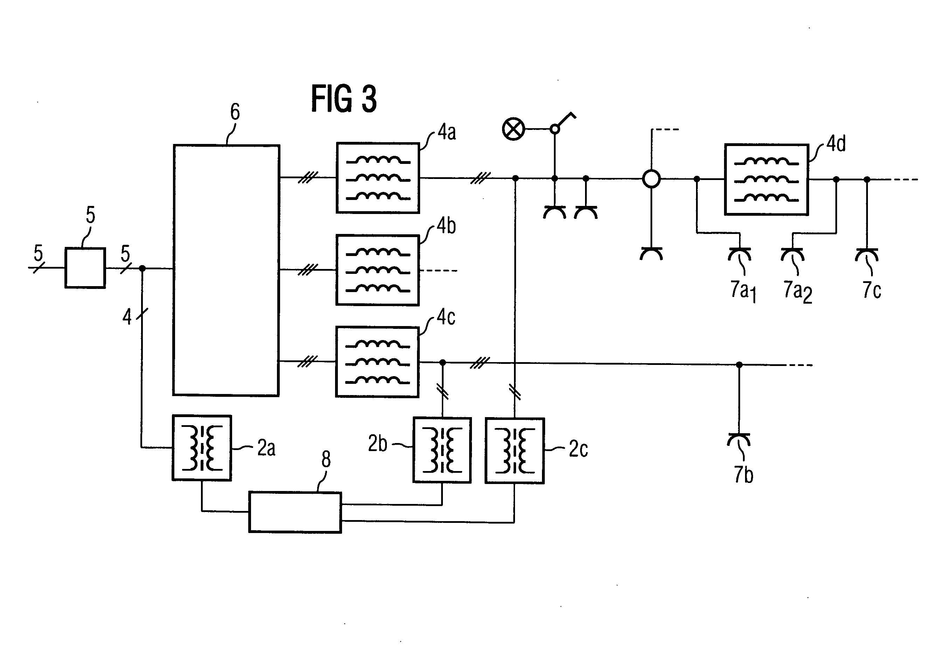

Eine Beispiel für die Anwendung der Erfindung im "Inhouse"-Bereich ist in Fig. 3 gezeigt. Eine fünfadrige Stromeinspeisung führt von dem Hausanschlußkasten 5 zu dem Hauptverteiler 6. Von dem Hauptverteiler 6 gehen dreiadrigen Zuleitungen zu den einzelnen Wohnungen ab.

Durch die Sperrfilter 4a, 4b, 4c ist die direkte Verbindung zwischen den einzelnen Wohnungen und von den Wohnungen nach Außen für eine Kommunikation gesperrt. Eine über eine Koppeleinheit an der Steckdose 7a₁ angeschlossene Kommunikationseinheit (nicht gezeigt) hat über die Koppeleinheit 2c, einen Router 8 und die Koppeleinheit 2a eine Verbindung mit dem Teil des Energieverteilungsnetzes welcher sich außerhalb des Hauses befindet ("Access"-Bereich). Für eine Kommunikationsverbindung zwischen einer an der Steckdose 7a₁ angeschlossenen Kommunikationseinheit (nicht gezeigt) und einer an der Steckdose 7b angeschlossenen Kommunikationseinheit (nicht gezeigt) in einer anderen Wohnung des gleichen Hauses stellt der Router 8 die Verbindung über die Koppeleinheiten 2b und 2c her.

Zwischen der Steckdose 7a₁ und der Steckdose 7a₂ befindet sich das Sperrfilter 4d. Eine Richtungsauswahl für die Kommunikation kann hier durch die Wahl des Anschlusses der Kommunikationseinheit an die Steckdose 7a₁ oder die Steckdose 7a₂ erfolgen.

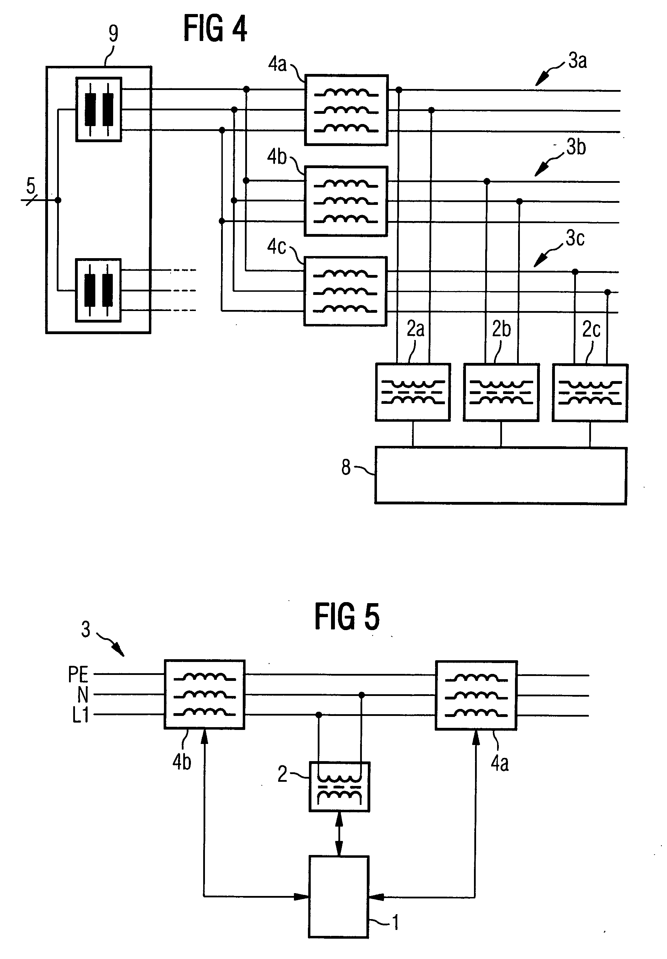

Eine Beispiel für die Anwendung der Erfindung im "Access"-Bereich ist in Fig. 4 gezeigt. Eine fünfadrige Stromeinspeisung führt von dem Mittelspannugsbereich zu einer Mittelspannugstransformatorstation 9. Von den Transformatoren der Mittelspannugstransformatorstation 9 führen Netzleitungen 3a, 3b, 3c über weitere Stationen und Verteilungen zu den Verbrauchern an den verschiedenen Standorten. In der dargestellten Schaltungsanordnung wird der Stromfuß auf die Netzleitungen 3a, 3b und 3c verzweigt. Für das erfindungsgemäße Verfahren wird mittels der Sperrfilter 4a, 4b und 4c die direkte Verbindung am Verzweigungspunkt gesperrt. Eine Kommunikationsverbindung der Netzleitungen 3a, 3b, 3c untereinander erfolgt über die Koppeleinheiten 2a, 2b, 2c und dem Router 8. Die Steuerung des Router 8 kann von einer Kommunikationseinheit oder durch die in der Telekommunikation üblichen Verfahren erfolgen.

Fig. 5 zeigt ein Ausführungsbeispiel für die Informationsflußsteuerung und die Ankoppelung einer Kommunikationseinheit 1 an eine Netzleitung 3. Die Kommunikationseinheit 1 ist über das Koppelelement 2 mit der Netzleitung verbunden. Vor und nach dem Koppelelement 2 sind das Sperrfilter 4a bzw. 4b angeordnet. Für eine Steuerung des Informationsflusses werden die Sperrfilter 4a, 4b in Abhängigkeit von der Sende- und Empfangsrichtung von der Kommunikationseinheit 1 geschaltet.

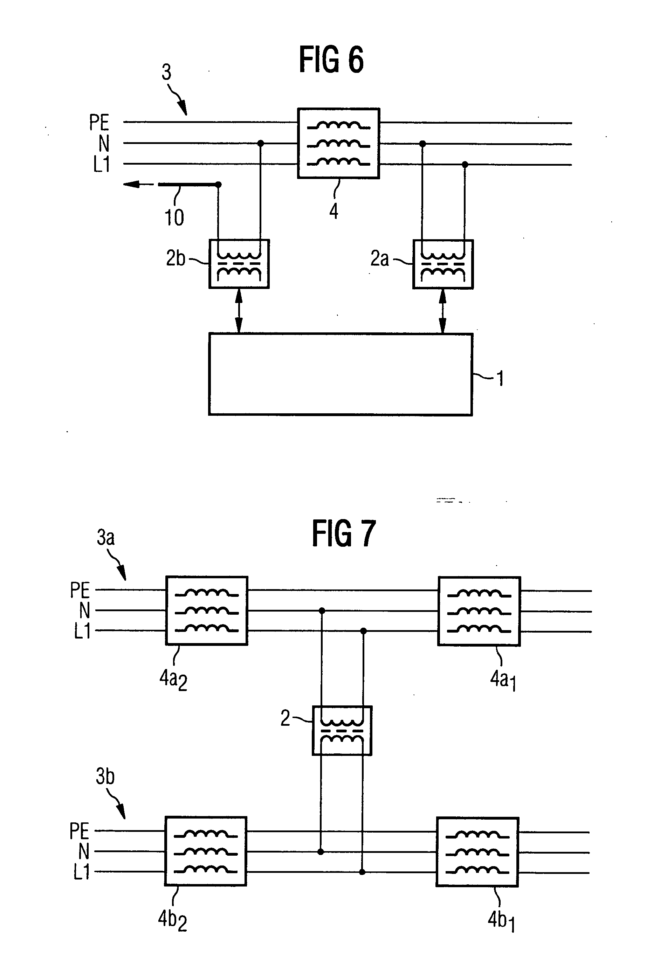

Fig. 6 zeigt ein weiteres Ausführungsbeispiel für die Informationsflußsteuerung und die Ankoppelung einer Kommunikationseinheit 1 an eine Netzleitung 3. Die Kommunikationseinheit 1 ist über das Koppelelement 2a und das Koppelelement 2b an die Netzleitung 3 angekoppelt. Zwischen den Koppelelementen 2a, 2b ist das Sperrfilter 4 angeordnet. Die über das Koppelelement 2b zu sendenden Informationen werden über eine Antenne 10 in die Netzleitung 3 eingestrahlt. Die Antenne 10 ist so ausgelegt, daß die Informationen mit einer hohen Richtwirkung in die Netzleitung 3 einstrahlt und empfangen werden. Im einfachsten Fall wird parallel zu der Netzleitung 3 eine lange Leitung als Antenne 10 angebracht. Die Thematik der Richtungseinkopplung von Signalen in Leitungen ist beschrieben in Zinke/Brunswig, Springer-Verlag, 1990, "Lehrbuch der Hochfrequenztechnik" und in Rothammel, Franckh-Kosmos, 1991, "Antennenbuch".

In der in Fig. 7 gezeigten Schaltungsanordnung sind die zwei Netzleitungen 3a und 3b über die Koppeleinheit 2 für eine Kommunikation verbunden. Über die schaltbaren Sperrfilter 4a₁, 4a₂, 4b₁ und 4b₂ kann der Informationsfluß zwischen den Netzleitungen 3a, 3b gesteuert werden. Die Sendeleistung wird nur in die gewünschte Richtung gelenkt und die Störung anderer Kommunikationseinheiten verringert.

## Patentansprüche

1. Anordnung zur Kommunikation in einem Energieverteilungsnetz mit Kommunikationseinheiten (1) für die Informationsverarbeitung und Koppeleinheiten (2), welche die Kommunikationseinheiten an das Energieverteilungsnetz ankoppeln, **gekennzeichnet durch** mindestens ein Informationsflußsteuerelement (4, 10), mittels dem die Richtung des Informationsflusses **durch** das Energieverteilungsnetz steuerbar ist.

2. Anordnung gemäß Anspruch 1,
**dadurch gekennzeichnet,**
**daß** das Informationsflußsteuerelementen (4, 10) ein oder mehrere Filter (4) enthält, welche den Informationsfluß sperren können.

3. Anordnung gemäß Anspruch 2,
**dadurch gekennzeichnet,**
**daß** vor und nach einem Informationsflußsteuerelement Koppeleinheiten (2) angeordnet sind.

4. Anordnung gemäß Anspruch 2,
**dadurch gekennzeichnet,**
**daß** vor und nach einer Koppeleinheit (2) ein Informationsflußsteuerelement (4, 10) angeordnet ist, das schaltbar ist.

5. Anordnung gemäß einem der Ansprüche 1 bis 4,
**dadurchgekennzeichnet**,
**daß** ein Informationsflußsteuerelement (4, 10) eine oder mehrere Antennen (10) aufweist, mittels derer die Informationen gerichtet in das Energieverteilungsnetz einstrahlbar und/oder gerichtet aus dem Energieverteilungsnetz empfangbar sind.

6. Verfahren zur Übertragung von Informationen über ein Energieverteilungsnetz mit einer Kommunikationseinheit (1) für die Informationsverarbeitung und einer Koppeleinheit (2), welche die Kommunikationseinheit (1) an das Energieverteilungsnetz ankoppelt,
**dadurch gekennzeichnet,**
**daß** mittels Richtungskoppelns (4, 10) der Informationsfluß durch das Energieverteilungsnetz gesteuert wird.

7. Verfahren gemäß Anspruch 6,
**dadurch gekennzeichnet,**
**daß** das Informationsfluß durch Filtern (4) in einer gewünschten Richtung gesperrt wird.

8. Verfahren gemäß Anspruch 7,
**dadurch gekennzeichnet,**
**daß** vor und nach der Sperrung des Informationsflußes Informationen in das Energieverteilungsnetz bzw. aus dem Energieverteilungsnetz eingekoppelt bzw. ausgekoppelt (2) werden.

9. Verfahren gemäß Anspruch 7,
**dadurch gekennzeichnet,**
**daß** vor und nach dem Einkoppeln bzw. Auskoppeln (2) der Informationen in Abhängigkeit von der Senderichtung bzw. der Empfangsrichtung gefiltert (4) wird.

10. Verfahren gemäß einem der Ansprüche 6 bis 9,
**dadurch gekennzeichnet,**
**daß** Informationen mittels einer oder mehreren Antennen (10) gerichtet in das Energieverteilungsnetz eingestrahlt und/oder gerichtet aus dem Energieverteilungsnetz empfangen werden können.
